(19) Europäisches Patentamt
European Patent Office
Office européen des brevets

(11) **EP 2 537 664 B1**

(12) **FASCICULE DE BREVET EUROPEEN**

(45) Date de publication et mention de la délivrance du brevet:
**23.03.2016 Bulletin 2016/12**

(51) Int Cl.:
***B29C 49/78*** *(2006.01)*   *B29C 49/06* *(2006.01)*
***B29C 49/68*** *(2006.01)*

(21) Numéro de dépôt: **12164557.6**

(22) Date de dépôt: **18.04.2012**

(54) **Procédé et machine de fabrication de récipients permettant une modification d'une cadence de chauffe**

Verfahren und Maschine zur Herstellung von Behältern, die eine Veränderung des zeitlichen Heizablaufs ermöglichen

Method and machine for the manufacturing of containers allowing a modification of a heating rate

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2011  FR 1155579**

(43) Date de publication de la demande:
**26.12.2012  Bulletin 2012/52**

(73) Titulaire: **SIDEL PARTICIPATIONS**
**76930 Octeville-sur-Mer (FR)**

(72) Inventeurs:
• **Gendre, Julien**
**76930 Octeville sur Mer (FR)**

• **Deau, Thierry**
**76930 Octeville sur Mer (FR)**
• **Derrien, Mikael**
**76930 Octeville sur Mer (FR)**

(74) Mandataire: **Siloret, Patrick**
**Sidel Blowing & Services**
**Avenue de la Patrouille de France**
**76930 Octeville-sur-Mer (FR)**

(56) Documents cités:
**AT-U1- 521    US-A1- 2009 108 505**

## Description

L'invention a trait à la fabrication des récipients, notamment bouteilles, flacons, par formage à partir d'ébauches (généralement des préformes, bien qu'il puisse s'agir de récipients intermédiaires) en matière plastique tel que polyéthylène téréphtalate (PET).

La fabrication d'un récipient comporte deux phases principales, à savoir une phase de chauffe de l'ébauche, lors de laquelle l'ébauche défile dans une unité de chauffe, suivie d'une phase de soufflage lors de laquelle l'ébauche ainsi chauffée est transférée dans une unité de moulage, et un fluide sous pression (généralement un gaz, ordinairement de l'air) est injecté dans l'ébauche pour lui conférer la forme finale du récipient.

Dans l'unité de chauffe (couramment appelée « four »), les ébauches défilent devant une rangée de sources de rayonnement infrarouge - généralement des lampes halogènes -, à une vitesse de défilement et selon un profil de chauffe prédéterminés.

La vitesse de défilement du four est la vitesse linéaire à laquelle circulent les préformes, qui sont accrochées à supports tournants ou « tournettes » montées sur une chaîne entraînée en mouvement par une roue dentée. Chaque tournette est solidaire d'un pignon engrenant une crémaillère pour entraîner la préforme en rotation autour de son axe au cours de son déplacement.

Le profil de chauffe, c'est-à-dire le profil de la quantité d'énergie effectivement reçue par les ébauches dans le four au cours de la phase dé chauffe, est déterminé principalement par trois paramètres de chauffe maîtrisables :

- la puissance du rayonnement infrarouge émis par les sources, qui détermine la quantité totale d'énergie injectée dans le four ;
- la topographie du four, et notamment la présence de réflecteurs en regard des sources, qui détermine une quantité d'énergie non absorbée directement par les ébauches mais réinjectée dans le four par réflexion ;
- le débit de la ventilation forcée des ébauches, qui détermine une quantité d'énergie évacuée du four.

Des structures de four sont décrites notamment dans les brevets SIDEL FR 2 703 944, FR 2 907 684, FR 2 863 932 (et dans leurs équivalents américains respectifs US 5 681 521, US 2009/317506, US 7 553 156).

Les unités de chauffe et de soufflage font généralement partie d'une ligne de production qui comprend également une unité de remplissage (ou remplisseuse), associée à une unité de bouchage, ainsi qu'éventuellement une unité d'étiquetage et une unité de paquetage (par exemple une fardeleuse).

Sur toute ligne de production il existe une machine critique, qui impose sa cadence à l'ensemble de la ligne. En l'espèce, la machine critique est la remplisseuse.

Pour compenser les écarts de cadence des différentes machines, des stocks tampons sont constitués entre elles, au moyen de convoyeurs à accumulation dont la capacité est généralement réglable pour permettre une adaptation du stock aux variations de cadence.

Mais les convoyeurs à accumulation sont chers et encombrants, et il serait théoriquement plus rentable de faire varier la cadence de chaque machine pour l'adapter à la cadence de la machine critique.

En pratique toutefois, si l'on peut effectivement, pour certaines machines (notamment l'unité de soufflage), faire varier la cadence (de manière limitée, de l'ordre de quelques %) - sans affecter la qualité de la production, certaines machines ne sont pas conçues pour supporter une telle variation. Tel est notamment le cas du four qui, une fois atteint son régime stationnaire, ne saurait voir sa cadence varier en cours de production, sauf à admettre une dérive incontrôlée de la qualité des récipients produits.

A ce jour, les opérateurs spécialisés ayant la charge des fours appliquent pour chaque gamme de production un profil de chauffe standardisé en fonction du type d'ébauche à chauffer, et d'une cadence de chauffe (c'est-à-dire une vitesse de défilement des préformes) constante déterminée par la cadence de production imposée par la machine critique. Si les opérateurs peuvent appliquer aux paramètres de chauffe des corrections manuelles ponctuelles, en fonction de la qualité perçue des récipients appréciée de manière subjective, les risques de dérive incontrôlée de la qualité des récipients produits sont trop importants pour que soit offerte aux opérateurs la liberté de modifier la cadence du four. De fait, en pratique la cadence du four est fixe en régime stationnaire.

On connaît du document AT 521 U1 (KOSME) un procédé d'ajustage de paramètres lors de la fabrication de récipients par chauffage de préformes selon un profil prédéterminé, puis soufflage des préformes ainsi chauffées. Il est envisagé dans ce document de modifier, le cas échéant, la vitesse de défilement des préformes et la température de chauffe lorsque celle-ci n'est pas conforme à la valeur visée.

L'invention vise à permettre une modification (pouvant être substantielle) de la cadence de chauffe, en maintenant le standard de qualité de la production.

A cet effet, il est proposé, en premier lieu, un procédé de fabrication de récipients à partir d'ébauches en matière plastique, qui comprend :

- une phase de chauffe des ébauches au défilé, dans un four muni d'une pluralité de sources de rayonnement, à une vitesse de défilement et selon un profil de chauffe prédéterminés ;
- une phase de soufflage des ébauches, au sein d'une unité de soufflage, pour former les récipients,

ce procédé comprenant les opérations consistant à :

a) modifier la vitesse de défilement des ébauches ;
b) modifier le profil de chauffe ;

c) établir, à l'issue d'une phase de chauffe, un profil thermique réel d'au moins une ébauche ;

d) effectuer, lors de la phase de soufflage, une mesure de pression dans ladite ébauche et détecter au moins un point singulier de pression ;

e) mesurer un premier écart entre le profil thermique réel de l'ébauche et un profil thermique théorique, et un deuxième écart entre le point singulier de pression et un point singulier théorique ;

f) tant que les écarts ne sont pas tous deux inférieurs' à une tolérance prédéterminée respective, répéter les opérations b) à e) ;

g) tant que les écarts sont tous deux inférieurs à la tolérance respective, et tant que la vitesse de défilement n'a pas atteint une valeur finale prédéterminée, répéter les opérations a) à e).

Diverses caractéristiques supplémentaires de ce procédé peuvent être prévues, seules ou en combinaison :

- le profil thermique comprend une thermographie de l'ébauche ;
- le profil thermique comprend une mesure de température effectuée sur une paroi externe de l'ébauche ;
- le profil thermique comprend une mesure de température effectuée sur une paroi interne de l'ébauche ;
- le point singulier de pression est un pic local de pression ;
- le profil de chauffe comprend une puissance électrique délivrée aux sources de rayonnement ;
- le profil de chauffe comprend une puissance électrique délivrée à un système de ventilation du four.

Il est proposé, en deuxième lieu, un produit programme d'ordinateur destiné à être stocké en mémoire d'une unité de traitement et/ou stocké sur un support mémoire lisible par un lecteur d'une unité de traitement, comprenant des instructions pour la mise en oeuvre des opérations a) à g) du procédé décrit ci-dessus

Il est proposé, en troisième lieu, une machine pour la fabrication de récipients à partir d'ébauches en matière plastique, qui comprend un four muni d'une pluralité de sources de rayonnement, pour la chauffe au défilé des ébauches, à une vitesse de défilement et suivant un profil de chauffe prédéterminés, et une centrale de commande programmée pour effectuer une modification de la vitesse de défilement et du profil de chauffe en fonction d'une mesure de température effectuée sur une ébauche en sortie du four, et d'une mesure de pression effectuée dans ladite ébauche au cours d'un soufflage subséquent.

Diverses caractéristiques supplémentaires de cette machine peuvent être prévues, seules ou en combinaison :

- la centrale de commande est programmée pour modifier une puissance électrique délivrée aux sources ;
- la centrale de commande est programmée pour modifier une puissance électrique déliv.rée à un système de ventilation du four.

D'autres objets et avantages de l'invention apparaîtront à la lumière de la description faite ci-après en référence aux dessins annexés dans lesquels :

- la figure 1 est une vue schématique en plan montrant une machine de fabrication de récipients comprenant une unité de chauffe d'ébauches et une unité de soufflage de récipients à partir des ébauches chauffées ;
- la figure 2 est une vue schématique en coupe montrant partiellement la machine de la figure 1 ;
- la figure 3 est un diagramme fonctionnel illustrant différentes étapes d'une modification contrôlée de la cadence de chauffe ;
- la figure 4 est un diagramme sur lequel sont tracées des courbes illustrant des paramètres de chauffe et de soufflage.

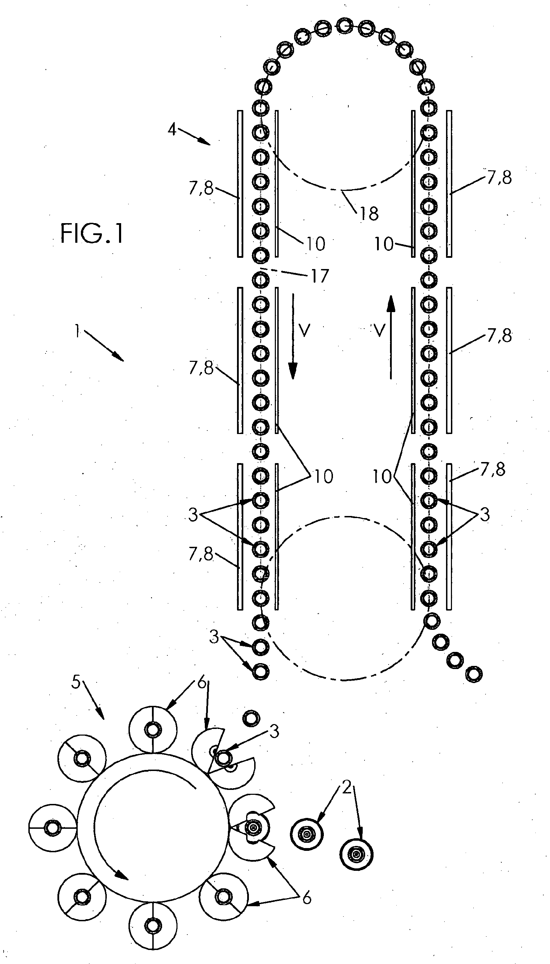

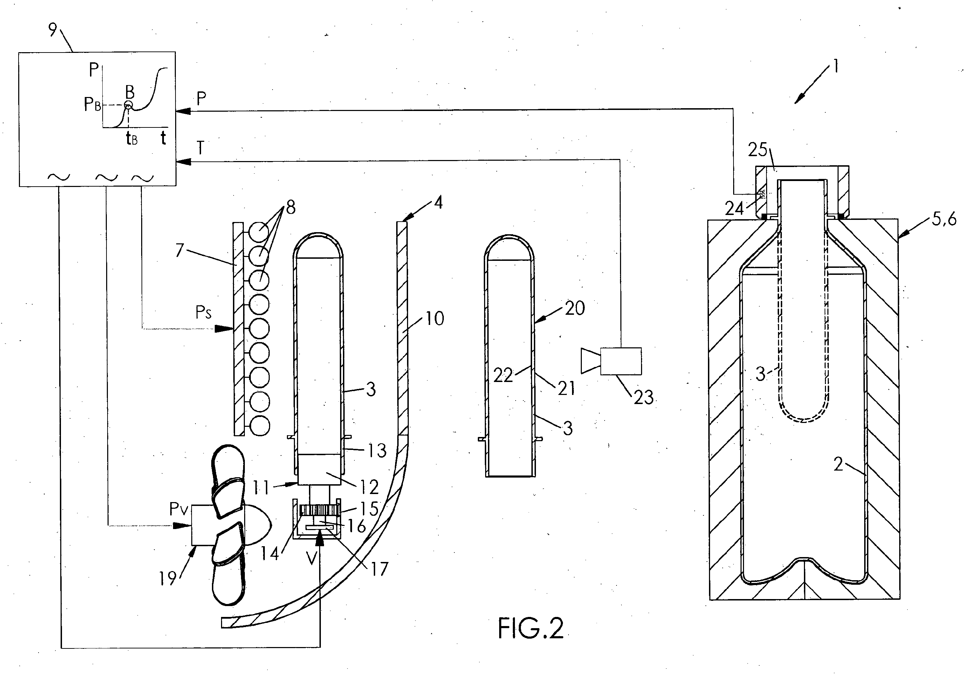

Sur les figures 1 et 2 est schématiquement représentée une machine **1** de fabrication de récipients **2** à partir d'ébauches **3** (il s'agit en l'occurrence de préformes) en matière plastique tel que PET. Cette machine **1** comprend une unité **4** de chauffe, également dénommée « four », ainsi qu'une unité **5** de moulage munie d'une série de moules **6** montés sur un carrousel et placée directement en aval du four **4.**

Lés préformes **3** sont convoyées au travers du four **4** pour y être chauffées préalablement aux opérations de soufflage ou d'étirage soufflage se déroulant au sein de l'unité **5** de moutage. À cet effet, le four **4** est équipé d'une première paroi **7** émettrice munie de sources **8** de rayonnement électromagnétique émettant sur un spectre (dans le domaine de l'infrarouge ou, éventuellement, dans le domaine des microondes) et à une puissance prédéterminés. Typiquement les sources **8** de rayonnement émettant dans le domaine infrarouge peuvent être des lampes (telles que des lampes halogènes, comme dans l'exemple illustré sur la figure 2) ou des diodes, telles que des diodes laser, par exemple du type à cavité verticale émettant par la surface (VCSEL). La puissance électrique, notée $P_S$, fournie aux sources, ainsi que le spectre du rayonnement émis, sont contrôlés au moyen d'une centrale **9** de commande programmable. De manière classique, le four **4** comprend, en regard de la paroi **7** émettrice, une deuxième paroi **10** réfléchissante, assurant une réflexion au moins partielle du rayonnement émis par les sources **8,** de manière à limiter les pertes par dissipation et ainsi optimiser la chauffe.

Chaque préforme **3** est accrochée à une suspente **11** rotative, également appelée tournette, qui comprend un doigt **12** emmanché dans un col **13** de la préforme **3**, ainsi qu'un pignon **14** engrenant une chaîne **15** fixe courant le long du parcours suivi par les préformes **3** au sein du four **4.** Ce mode de convoyage assure une rotation sensiblement uniforme de la préforme **3** au cours de sa chauffe. Il est à noter que le convoyage des préformes **3** peut indifféremment être assuré col **13** en bas (comme dans l'exemple illustré) ou col **13** en haut. Chaque tournette **11** est entraînée en rotation autour d'un axe **16** solidaire d'une courroie **17** entraînée en déplacement par une roue **18** dont la motorisation est pilotée par la centrale 9 de commande, à une vitesse **V** de défilement linéaire prédéterminée qui est fixe en régime stationnaire. L'écartement entre les préformes **3** étant fixe, la cadence de production (c'est-à-dire, en pratique, la quantité de préformes **3** sortant du four **4** pendant une durée prédéterminée, généralement 1 h) est directement proportionnelle à la vitesse V de défilement.

La chauffe des préformes **3** est réalisée de manière telle que les préformes **3** présentent à la sortie du four **4** une température moyenne de chauffe supérieure à la température de transition vitreuse du matériau. Typiquement, la température moyenne de chauffe est d'environ 140°C pour des préformes **3** en PET dont la température de transition vitreuse est d'environ 80°C. Le transit des préformes **3** entre la sortie du four **4** et l'entrée de l'unité **5** de moulage est suffisamment bref pour que le refroidissement des préformes **3** par dissipation thermique soit négligeable.

Selon un mode de réalisation, (notamment dans le cas où, comme illustré sur la figure 2 les sources **8** sont des lampes halogène, dissipatrices de chaleur), le four **4** comprend un système **19** de ventilation forcée sous forme d'une soufflerie générant un flux d'air pulsé dirigé vers les préformes **3** circulant dans le four **4,** afin d'évacuer une partie des calories. La soufflerie **19** est pilotée par la centrale 9 de commande, qui contrôle la puissance électrique, notée $P_V$, délivrée à la soufflerie **19** (et donc le débit du flux d'air généré).

La puissance électrique $P_S$ fournie aux sources **8,** la puissance $P_V$ fournie à la soufflerie **19** et la vitesse V de défilement des préformes **3** sont toutes trois pilotées par la centrale de commande, qui est programmée en conséquence.

Afin d'adapter la cadence de production du four **4** à une variation de cadence d'une machine critique (par exemple une unité de remplissage) située sur la même ligne de production, on souhaite introduire une modification de la vitesse V de défilement, soit pour la majorer (augmentation de cadence), soit au contraire pour la minorer (diminution de cadence), tout en préservant la qualité des récipients **2** à la sortie de l'unité **5** de moulage.

La modification de la vitesse V de défilement entraînant une modification du temps d'exposition des préformes **3** au rayonnement assurant leur chauffe, cette modification nécessite une modification du profil de chauffe si l'on souhaite maintenir la qualité des récipients **2.**

L'expérience montre que la qualité du récipient **2** dépend en grande partie du profil de température de la préforme **3** sortant du four **4.** En particulier, une température trop basse de la préforme **3** peut induire sur le récipient **2** l'apparition d'une perlescence (aspect perlé) blanchâtre, conséquence d'un surétirage de la préforme **3** provoquant au niveau moléculaire une rupture des longues chaînes polymérisées. A contrario, une température trop élevée de la préforme **3** peut provoquer une cristallisation sphérolitique du matériau, rendant la préforme **3** impropre au soufflage.

Il a donc été déterminé que toute préforme **3** sortant du four **4** doit présenter un profil thermique réel correspondant à un profil théorique prédéterminé pour lequel la qualité du récipient **2** est optimale. Cela ne signifie pas nécessairement que le profil thermique réel doit être strictement égal au profil théorique, ce qui en pratique est impossible à obtenir, mais que le profil thermique réel doit présenter par rapport au profil théorique un écart inférieur à une certaine tolérance qui peut être déterminée par l'homme du métier en conduisant des tests ordinaires, et pour laquelle la qualité des récipients **2** obtenus est conforme aux prescriptions de l'embouteilleur.

Le profil thermique peut se réduire à une unique mesure de température moyenne, effectuée au moyen d'un capteur thermique disposé à la sortie du four **4.** De préférence toutefois, le profil thermique comprend une pluralité de mesures de température effectuées sur un corps **20** de la préforme **3,** notamment sur une paroi **21** externe et/ou sur une paroi **22** interne de celui-ci.

Selon un exemple de réalisation illustré sur la figure 2, le profil thermique comprend une thermographie de la paroi **21** externe sur tout ou partie du corps **20,** réalisée au moyen d'une caméra **23** thermique (infrarouge) reliée à la centrale 9 de commande, à laquelle les données thermographiques sont communiquées par la caméra **23.**

Selon un autre exemple de réalisation, le profil thermique comprend une mesure de température ou une thermographie effectuée sur la paroi **22** interne, qui peut être réalisée conformément à la description de la demande de brevet français n° FR 2 935 924 ou de son équivalent international n° WO 2010/031923, dont le contenu est ici incorporé par référence.

Il a cependant été déterminé que, si la maîtrise du profil thermique des préformes **3** est nécessaire au maintien de la qualité finale des récipients **2** produits, elle n'est pas suffisante. Des essais ont en effet démontré qu'à profils thermiques sensiblement identiques, et à caractéristiques mécaniques égales (les préformes **3** peuvent en effet présenter des défauts de forme ou de matière), deux préformes **3** peuvent conduire à des récipients **2** de qualité inégale.

Une rétroaction sur les paramètres de chauffe ($P_S$ et $P_V$) sur la base du seul profil thermique des préformes **3** sortant du four **4** s'est de fait révélée insuffisante pour maîtriser la qualité des récipients **2.**

Des tests ont toutefois montré qu'en tenant compte à la fois du profil thermique et de l'évolution de la pression dans la préforme **3** au cours du soufflage, on peut efficacement rétroagir sur les paramètres de chauffe pour maîtriser la qualité des récipients **2.**

Plus précisément, sans qu'il soit nécessaire de prendre en compte la courbe de pression dans son ensemble, il s'est révélé suffisant de tenir compte d'au moins un point singulier sur cette courbe.

En pratique, il s'est même révélé suffisant de tenir compte d'un pic local de pression lors d'une opération de présoufflage, correspondant au seuil d'écoulement plastique de la préforme **3,** à partir duquel débute l'expansion radiale de celle-ci dans le moule **6.**

Les caractéristiques de ce point, dénommé point B, et son importance sur la qualité du récipient **2,** ont été présentées dans la demande de brevet français n° FR 2 909 305 (ou dans son équivalent international n° WO 2008/081108).

Il peut a priori sembler que le point B n'apporte aucune information supplémentaire, par rapport au seul profil thermique de la préforme **3** à la sortie du four **4.** En effet, il est admis que la position du point B est influencée par la température moyenne de chauffe de la préforme **3** : grossièrement, une augmentation de la température induit une anticipation de l'instant $t_B$ d'occurrence du point B, et une diminution de la pression $P_B$ correspondante; a contrario, une diminution de la température induit en théorie un retard de l'instant $t_B$ d'occurrence du point B, et une augmentation de la pression $P_B$ correspondante. Ces affirmations sont justes si l'on se borne à considérer une température moyenne.

En réalité, le profil de chauffe de la préforme **3** et le point B ne fournissent pas deux informations redondantes mais complémentaires quant aux caractéristiques intrinsèques de la préforme **3,** permettant d'évaluer son adéquation avec un modèle théorique satisfaisant.

L'hypothèse invoquée pour justifier ce constat est que, à profil de température similaire, d'infimes variations de température, soit qui ne peuvent être mesurées, soit qu'il serait trop contraignant de prendre en compte, peuvent affecter de manière sensible la qualité du soufflage, dont l'expérience a montré que le point B est un indicateur fiable - et mesurable.

De sorte que la prise en compte à la fois :

- du profil de température de la préforme **3** à la sortie du four **4,**
- et d'un point singulier de pression dans la préforme pendant le soufflage (en l'occurrence le point B),

permet d'effectuer une rétroaction fiable sur le profil de chauffe, de manière à maintenir la qualité des récipients **3** lors d'une modification de la cadence du four **4.**

La mesure de pression dans le récipient **2** peut être effectuée au moyen d'un capteur **24** de pression, monté par exemple (comme illustré sur la figure 2) dans une tuyère **25** d'injection de fluide dans la préforme **3,** venant coiffer le moule **6** lors du soufflage, et relié à la centrale **9** de commande à laquelle le capteur **24** communique ses mesures.

La fabrication des récipients **2** à partir des préformes **3** comprend deux phases principales, à savoir une phase de chauffe des préformes **3** au défilé dans le four 4, à une vitesse V de défilement et selon un profil de chauffe prédéterminés, et une phase consécutive de soufflage des préformes **3, au** sein de l'unité **5** de soufflage, chaque préforme **3** étant introduite dans un moule **6** comme illustré sur les figures 1 et 2.

La vitesse V de défilement et le profil de chauffe (caractérisé par la puissance $P_S$ délivrée aux sources **8 et** la puissance $P_V$ délivrée à la soufflerie **19)** sont programmés dans (et contrôlés par) la centrale **8** de commande.

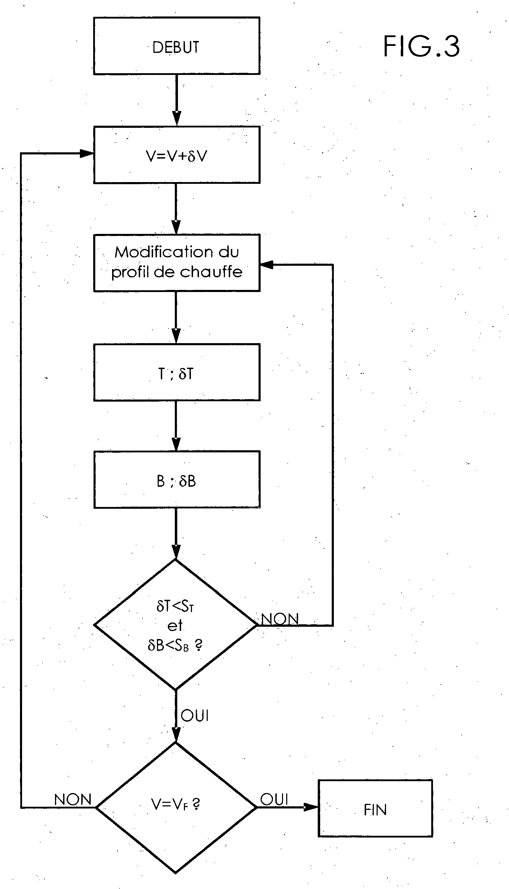

A partir d'une vitesse $V_i$ de défilement initiale, le mode opératoire permettant de modifier cette vitesse pour atteindre une vitesse finale $V_F$ est à présent décrit. Ce mode opératoire est illustré sur la figure 3.

La centrale de commande commence par piloter :

    a) une modification de la vitesse V de défilement et
    b) une modification du profil de chauffe,

ce de manière simultanée ou quasi-simultanée.

Les modifications introduites sont incrémentales et correspondent à un pourcentage seulement de la modification finale visée (inférieure à 10%, et de préférence inférieure à 5% du différentiel entre la valeur initiale et la valeur finale du paramètre modifié). En termes simplifiés, la vitesse V se trouve incrémentée d'une variation $\delta V$ (positive ou négative), la vitesse modifiée étant égale à $V+\delta V$ De même, la puissance Ps délivrée aux sources **8** et/ou la puissance $P_V$ délivrée à la soufflerie **19** se trouvent incrémentées d'une variation respective $\delta P_S$ ou $\delta P_V$ (positive ou négative), la puissance $P_S$ ou $P_V$ modifiée étant égale à $P_S+ \delta P_S$ ou respectivement à $P_V+ \delta P_V$.

Concrètement, la modification de la vitesse V de défilement peut être effectuée en faisant varier la vitesse de rotation de la roue **18** motrice sur laquelle circule la courroie **17** entraînant les préformes **3.**

A la suite de cette première modification, on procède ensuite :

    c) à l'établissement, à la sortie du four **4** et à l'issue d'une phase complète de chauffe, d'un profil thermique réel d'au moins une préforme **3** (ou d'une sélection de préformes **3** ou encore, de préférence, de toutes les préformes **3)** entrée(s) dans le four **4** après la modification de la vitesse V de défilement et du profil de chauffe, puis
    d) lors de la phase de soufflage, à une mesure de pression dans cette (ou ces) préforme(s) **3.**

Le profil thermique est mesuré au moyen de la caméra **23** thermique, le résultat étant une courbe (ou un nuage de points) correspondant aux variations de la température T suivant une fonction f de la coordonnée axiale (ou altitude, notée Z) où la mesure est effectuée sur la préforme **3**, en considérant (ce qui correspond à la majorité des cas, si l'on excepte le cas de la chauffe préférentielle destinée à la fabrication de récipients non symétriques de révolution) qu'à altitude constante la température T est constante. Le profil de température est par conséquent fourni par la courbe T=f(Z).

La mesure de pression est effectuée au moyen du capteur de pression, le résultat étant une courbe (ou un nuage de points) correspondant aux variations de la pression P suivant une fonction f du temps t écoulé depuis l'introduction de la préforme **3** dans le moule **6** : P=g(t).

Les mesures T et P sont communiquées en continu à la centrale **9** de commande. Celle-ci acquiert les données, effectue une comparaison respective du profil réel de température avec le profil théorique mémorisé, et détecte dans la courbe de pression le point singulier programmé (en l'espèce le point B). La centrale **9** de commande effectue ensuite les opérations consistant à :

e) mesurer un premier écart δT entre le profil thermique réel de la préforme **3** et le profil thermique théorique en mémoire ; mesurer un deuxième écart δB entre le point singulier réel de pression (point B réel) et le point singulier théorique en mémoire (point B théorique).

L'écart δB entre le point B réel et le point B théorique peut indifféremment être un écart δPB dans la valeur de la pression au point B, ou un écart δtB dans la valeur de l'instant tB d'occurrence du point B.

La centrale **9** de commande effectue ensuite l'opération consistant à :

f) comparer l'écart δT de profil thermique avec une tolérance ST prédéterminée (mémorisée dans la centrale), et comparer l'écart δB (δPB et/ou δtB) avec une tolérance prédéterminée SB (de pression et/ou de temps) également en mémoire.

Si les écarts δT et δB ne sont pas tous deux inférieurs à leur tolérance respective ST et SB, ce qui signifie qu'une dérive est constatée dans la qualité des préformes **3**, alors la centrale **9** commande une répétition des opérations b) à e) afin de corriger le profil de chauffe par itération jusqu'à ce que les écarts δT et δB soient compris dans les tolérances prévues.

Tant que les écarts δT et δB sont compris dans les tolérances prévues ST et SB, et tant que la valeur finale VF n'est pas atteinte, la centrale **9** commande une répétition des opérations a) à e), c'est-à-dire une réitération des opérations de modification de cadence et de profil de chauffe.

Les opérations décrites ci-dessus peuvent être mises en oeuvre par des instructions d'un programme d'ordinateur implémenté dans un processeur de la centrale **9** de commande, ou sur un support externe (type CD-ROM) lisible par celle-ci.

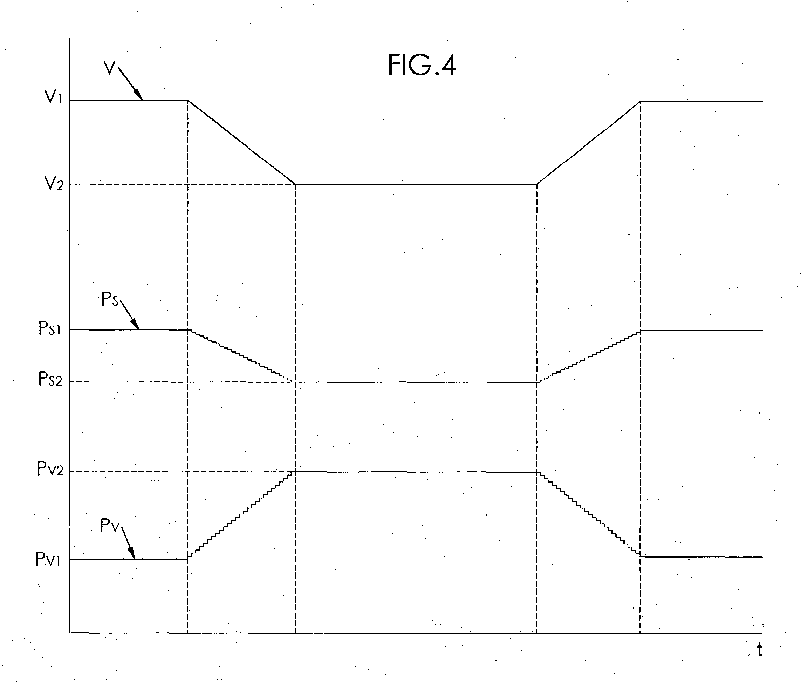

On a illustré sur le diagramme de la figure 4 deux modifications successives de cadence : d'abord, en partant d'une vitesse V1 haute, une diminution de la vitesse V jusqu'à une vitesse V2 basse (Vi=V1 ; VF=V2), puis inversement, en partant de la vitesse V2 basse, une augmentation de la vitesse V jusqu'à la vitesse V1 haute (Vi=V2 ; VF=V1). On a tracé sur le diagramme :

- la courbe illustrant la variation de la vitesse V de défilement,
- la courbe illustrant la variation de la puissance PS électrique fournie aux sources **8,** et ,
- la courbe illustrant la variation de la puissance PV électrique fournie à la soufflerie **19**.

Par simplicité, on a représenté une diminution linéaire et continue de la vitesse V. En revanche, les variations par créneaux des puissances PS et PV illustrent les modifications de ces paramètres par itérations successives (δPS et δPV), commandées par la centrale **9** au fur et à mesure des variations de cadence. On voit sur le diagramme que le procédé est réversible. Lors de la première modification de cadence, la puissance PS diminue par paliers successifs d'une valeur PS1 haute jusqu'à une valeur PS2 basse ; puis, lors de la seconde modification de cadence, la puissance PS augmente par paliers successifs de la valeur PS2 basse jusqu'à la valeur PS1 haute. Parallèlement, la puissance PV augmente d'abord par paliers successifs d'une valeur PS1 basse jusqu'à une valeur PV2 haute ; puis, lors de la seconde modification de cadence, la puissance PV diminue par paliers successifs de la valeur PV2 haute jusqu'à la valeur PV1 basse.

Il a été constaté que la modification des seuls paramètres de puissance PS délivrée aux sources et de puissance PV délivrée au système de ventilation est suffisante pour maintenir la qualité des récipients **2** au cours d'une modification de cadence du four **4**.

Ce constat peut trouver une explication dans la théorie suivante.

En première approximation, la quantité d'énergie EP effectivement absorbée par les préformes **3** dans le four **4** est égale à la quantité d'énergie ES émise par les sources **8**, diminuée de la quantité d'énergie EV évacuée du four **4** par la ventilation **19** et de la quantité d'énergie EF absorbée par les composants du four **4** lui-même, qui subissent un échauffement :

$$E_P \approx E_S - E_V - E_F$$

On peut raisonnablement estimer que la quantité d'énergie EF absorbée par les composants du four **4** est négligeable au regard de si l'on considère que la grande majorité des composants soumis au rayonnement sont des réflecteurs qui n'absorbent qu'une infime partie du rayonnement qu'ils reçoivent, l'essentiel étant réfléchi vers les préformes **2**.

De sorte qu'en deuxième approximation, la quantité d'énergie $E_P$ effectivement absorbée par les préformes **3** dans le four **4** est sensiblement égale à la quantité d'énergie $E_S$ émise par les sources **8**, diminuée de la quantité d'énergie $E_V$ évacuée du four **4** par la soufflerie **19** :

$$E_P \approx E_V - E_E$$

Par ailleurs, on estime, selon une bonne approximation, que :

- la quantité d'énergie $E_S$ émise par les sources **8** est proportionnelle à la puissance électrique $P_S$ absorbée, en admettant que leur rendement est constant : $E_S \approx K1 \cdot P_S$, où K1 est une constante positive ;
- la quantité d'énergie $E_V$ évacuée du four **4** par la soufflerie **19** est proportionnelle à la fois à la puissance électrique $P_V$ absorbée par la soufflerie **19** et à la quantité d'énergie $E_S$ émise par les sources **8** (c'est-à-dire à la puissance électrique $P_S$ absorbée par les sources **8**) : $E_V \approx K2 \cdot P_S \cdot P_V$, où K2 est une constante positive.

De sorte que la quantité d'énergie $E_P$ effectivement absorbée par les préformes 3 peut s'exprimer de la manière suivante :

$$E_P \approx (K1 \cdot - K2 \cdot P_V) \, P_S$$

On voit que selon cette approche l'énergie $E_P$ effectivement absorbée par les préformes **3** augmente de manière linéaire ou quasi-linéaire avec l'augmentation de la puissance électrique $P_S$ fournie aux sources **8**, et au contraire diminue de manière linéaire ou quasi-linéaire avec l'augmentation de la puissance électrique $P_V$ fournie à la soufflerie.

Ainsi configurée et programmée, la machine **9** (et son procédé) permet d'introduire une modification automatique de la cadence du four **4** tout en maintenant la qualité des récipients **2**. Il en résulte une meilleure adaptabilité du four **4** au sein de la ligne de production, et la possibilité de faire varier la cadence de manière continue en cours de production, en limitant les pertes de récipients **2** non-conformes.

## Revendications

1. Procédé de fabrication de récipients **(2)** à partir d'ébauches **(3)** en matière plastique, qui comprend :

    - une phase de chauffe des ébauches **(3)** au défilé, dans un four **(4)** muni d'une pluralité de sources **(8)** de rayonnement, à une vitesse (V) de défilement et selon un profil de chauffe prédéterminées ;
    - une phase de soufflage des ébauches **(3)**, au sein d'une unité **(5)** de soufflage, pour former les récipients **(2)**,

    ce procédé étant **caractérisé en ce qu'**il comprend les opérations suivantes :

    a) modifier la vitesse (V) de défilement des ébauches **(3)** ;
    b) modifier le profil de chauffe ;
    c) établir, à l'issue d'une phase de chauffe, un profil thermique réel d'au moins une ébauche **(3)** ;
    d) effectuer, lors de la phase de soufflage, une mesure de pression dans ladite ébauche **(3)** et détecter au moins un point (B) singulier de pression ;
    e) mesurer un premier écart entre le profil thermique réel de l'ébauche **(3)** et un profil thermique théorique, et un deuxième écart entre le point singulier de pression et un point singulier théorique ;
    f) tant que les écarts ne sont pas tous deux inférieurs à une tolérance prédéterminée respective, répéter les opérations b) à e) ;
    g) tant que les écarts sont tous deux inférieurs à la tolérance respective, et tant que la vitesse (V) de défilement n'a pas atteint une valeur finale prédéterminée, répéter les opérations a) à e).

2. Procédé selon la revendication **1, caractérisé en ce que** le profil thermique comprend une thermographie de l'ébauche **(3)**.

3. Procédé selon la revendication **1** ou la revendication **2, caractérisé en ce que** le profil thermique comprend une mesure de température effectuée sur une paroi **(21)** externe de l'ébauche, **(3)**:

4. Procédé selon l'une des revendications **1** à **3, caractérisé en ce que** le profil thermique comprend une mesure de température effectuée sur une paroi **(22)** interne de l'ébauche **(3)**.

5. Procédé selon l'une des revendications **1** à **4, caractérisé en ce que** le point singulier de pression est un pic local de pression.

6. Procédé selon l'une des revendications **1** à **5, caractérisé en ce que** le profil de chauffe comprend une puissance ($P_S$) électrique délivrée aux sources **(8)** de rayonnement.

7. Procédé selon l'une des revendications **1** à **6, caractérisé en ce que** le profil de chauffe comprend une puissance (P$_V$) électrique délivrée à un système **(19)** de ventilation du four **(4)**.

8. Programme d'ordinateur destiné à être stocké en mémoire d'une unité de traitement et/ou stocké sur un support mémoire lisible par un lecteur d'une unité de traitement, comprenant des instructions pour la mise en oeuvre des opérations **a) à g)** d'un procédé selon l'une des revendications **1 à 7**.

9. Machine **(1)** pour la fabrication de récipients **(2)** à partir d'ébauches **(3)** en matière plastique, qui comprend un four **(4)** muni d'une pluralité de sources **(8)** de rayonnement, pour la chauffe au défilé des ébauches **(3)** à une vitesse (V) de défilement et suivant un profil de chauffe prédéterminés, **caractérisée en ce qu'**elle comprend une centrale **(9)** de commande programmée pour effectuer les étapes du procédé selon l'une des revendications 1 à 7.

10. Machine **(1)** selon la revendication **9, caractérisée en ce que** la centrale **(9)** de commande est programmée pour modifier une puissance (Ps) électrique délivrée aux sources **(8)**.

11. Machine **(1)** selon la revendication **9** ou la revendication **10, caractérisée en ce que** la centrale **(9)** de commande est programmée pour modifier une puissance électrique (P$_V$) délivrée à un système **(19)** de ventilation du four **(4)**.


**Patentansprüche**

1. Verfahren zur Herstellung von Behältern (2), ausgehend von Rohlingen (3) aus Kunststoff, das Folgendes aufweist:

   - eine Aufheizphase der Rohlinge (3) im Durchlauf in einem Ofen (4), der mit mehreren Strahlungsquellen (8) ausgestattet ist, bei einer vorbestimmten Durchlaufgeschwindigkeit (V) und nach einem vorbestimmten Heizprofil;
   - eine Beblasungsphase der Rohlinge (3) in der Gebläseeinheit (5), um die Behälter (2) zu bilden,

   wobei dieses Verfahren **dadurch gekennzeichnet ist, dass** es die folgenden Schritte aufweist:

   a) Modifizieren der Durchlaufgeschwindigkeit (V) der Rohlinge (3);
   b) Modifizieren des Heizprofils;
   c) Erstellen eines tatsächlichen Wärmeprofils von mindestens einem Rohling (3) nach einer Aufheizphase;
   d) Durchführen einer Druckmessung in dem Rohling (3) während der Beblasungsphase und Erkennen von mindestens einem einzelnen Druckpunkt (B) ;
   e) Messen einer ersten Abweichung zwischen dem tatsächlichen Wärmeprofil des Rohlings (3) und einem theoretischen Wärmeprofil und einer zweiten Abweichung zwischen dem einzelnen Druckpunkt und einem einzelnen theoretischen Punkt;
   f) Wiederholen der Schritte b) bis e), solange die Abweichungen alle beide nicht niedriger als eine jeweilige vorbestimmte Toleranz sind;
   g) Wiederholen der Schritte a) bis e), solange die Abweichungen alle beide niedriger als die jeweilige Toleranz sind und solange die Durchlaufgeschwindigkeit (V) einen vorbestimmten Endwert nicht erreicht hat.

2. Verfahren nach Anspruch 1, **dadurch gekennzeichnet, dass** das Wärmeprofil eine Thermographie des Rohlings (3) aufweist.

3. Verfahren nach Anspruch 1 oder 2, **dadurch gekennzeichnet, dass** das Wärmeprofil eine Temperaturmessung aufweist, die an einer Außenwand (21) des Rohlings (3) durchgeführt wird.

4. Verfahren nach einem der Ansprüche 1 bis 3, **dadurch gekennzeichnet, dass** das Wärmeprofil eine Temperaturmessung aufweist, die an einer Innenwand (22) des Rohlings (3) durchgeführt wird.

5. Verfahren nach einem der Ansprüche 1 bis 4, **dadurch gekennzeichnet, dass** der einzelne Druckpunkt eine lokale Druckspitze ist.

6. Verfahren nach einem der Ansprüche 1 bis 5, **dadurch gekennzeichnet, dass** das Heizprofil eine elektrische Leistung (P$_S$) aufweist, die an die Strahlungsquellen (8) abgegeben wird.

7. Verfahren nach einem der Ansprüche 1 bis 6, **dadurch gekennzeichnet, dass** das Heizprofil eine elektrische Leistung (P$_V$) aufweist, die an ein Belüftungssystem (19) des Ofens (4) abgegeben wird.

8. Computerprogramm, das dazu bestimmt ist, im Speicher einer Verarbeitungseinheit gespeichert zu werden und/oder auf einem Speichermedium gespeichert zu werden, das von einem Leser einer Verarbeitungseinheit lesbar ist, das Anweisungen zum Umsetzen der Schritte a) bis g) eines Verfahrens nach den Ansprüchen 1 bis 7 aufweist.

9. Maschine (1) zur Herstellung von Behältern (2), ausgehend von Rohlingen (3) aus Kunststoff, die einen Ofen (4) aufweist, der mit mehreren Strahlungsquellen (8) ausgestattet ist, um die Rohlinge (3) im Durchlauf bei einer vorbestimmten Durchlaufgeschwindigkeit (V) und nach einem vorbestimmten Heizprofil aufzuheizen, **dadurch gekennzeichnet, dass** sie eine Steuereinheit (9) aufweist, die programmiert ist, um die Schritte des Verfahrens nach einem der Ansprüche 1 bis 7 durchzuführen.

10. Maschine (1) nach Anspruch 9, **dadurch gekennzeichnet, dass** die Steuereinheit (9) programmiert ist, um eine elektrische Leistung ($P_S$) zu modifizieren, die an die Strahlungsquellen (8) abgegeben wird.

11. Maschine (1) nach Anspruch 9 oder 10, **dadurch gekennzeichnet, dass** die Steuereinheit (9) programmiert ist, um eine elektrische Leistung ($P_V$) zu modifizieren, die an ein Belüftungssystem (19) des Ofens (4) abgegeben wird.

## Claims

1. Method of manufacturing containers (2) from plastic parisons (3), which comprises:

   - a heating phase in which the parisons (3) are heated as they pass through an oven (4) fitted with a plurality of radiated heat sources (8), at a predetermined speed (V) of travel and at a predetermined heating profile;
   - a blowing phase in which the parisons (3) are blow-moulded, within a blow-moulding unit (5), to form the containers (2),

   this method being **characterized in that** it comprises the following operations:

   a) modifying the speed (V) of travel of the parisons (3);
   b) modifying the heating profile;
   c) at the end of a heating phase establishing an actual thermal profile for at least one parison (3) ;
   d) during the blowing phase, measuring the pressure inside the said parison (3) and detecting at least one singular pressure point (B);
   e) measuring a first discrepancy between the actual thermal profile of the parison (3) and a theoretical thermal profile, and a second discrepancy between the singular pressure point and a theoretical singular point;
   f) repeating operations b) to e) for as long as the discrepancies are not both within a predetermined respective tolerance;
   g) repeating operations a) to e) for as long as the discrepancies are both within the respective tolerance and as long as the speed (V) of travel has not reached a predetermined final value.

2. Method according to Claim 1, **characterized in that** the thermal profile comprises a thermograph of the parison (3).

3. Method according to Claim 1 or Claim 2, **characterized in that** the thermal profile comprises a temperature measurement taken on an external wall (21) of the parison (3).

4. Method according to one of Claims 1 to 3, **characterized in that** the thermal profile comprises a temperature measurement taken on an internal wall (22) of the parison (3).

5. Method according to one of Claims 1 to 4, **characterized in that** the singular pressure point is a local pressure spike.

6. Method according to one of Claims 1 to 5, **characterized in that** the heating profile comprises an electrical power ($P_S$) delivered to the radiated heat sources (8).

7. Method according to one of Claims 1 to 6, **characterized in that** the heating profile comprises an electrical power ($P_V$) delivered to a ventilation system (19) of the oven (4).

8. Computer program intended to be stored in a memory of a processing unit and/or stored on a memory medium that can be read by a reader of a processing unit, comprising instructions for implementing operations a) to g) of a method according to one of Claims 1 to 7.

9. Machine (1) for manufacturing containers (2) from plastic parisons (3), which comprises an oven (4) fitted with a plurality of radiated heat sources (8) for heating the parisons (3) as they travel at a predetermined speed (V) of travel and at a predetermined heating profile, **characterized in that** it comprises a programmed control unit (9) for carrying out the steps of the method according to one of Claims 1 to 7.

10. Machine (1) according to Claim 9, **characterized in that** the control unit (9) is programmed to modify an electrical power ($P_S$) delivered to the sources (8).

11. Machine (1) according to Claim 9 or Claim 10, **characterized in that** the control unit (9) is programmed to modify an electrical power ($P_V$) delivered to a ventilation system (19) of the oven (4).

FIG.1

FIG.2

EP 2 537 664 B1

FIG.3

```
        ┌──────────────┐
        │    DEBUT     │
        └──────┬───────┘
               │
        ┌──────▼───────┐
   ┌───▶│   V=V+δV     │
   │    └──────┬───────┘
   │           │
   │    ┌──────▼───────┐
   │    │ Modification du │◀───┐
   │    │ profil de chauffe │    │
   │    └──────┬───────┘    │
   │           │             │
   │    ┌──────▼───────┐    │
   │    │    T ; δT     │    │
   │    └──────┬───────┘    │
   │           │             │
   │    ┌──────▼───────┐    │
   │    │    B ; δB     │    │
   │    └──────┬───────┘    │
   │           │             │
   │        ◇──▼──◇          │
   │       δT<ST             │
   │        et      NON──────┘
   │       δB<SB ?
   │        ◇─────◇
   │           │
   │          OUI
   │        ◇──▼──◇
   └─NON───  V=VF ?  ──OUI──▶ ┌─────┐
            ◇─────◇           │ FIN │
                              └─────┘
```

FIG.4

EP 2 537 664 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2703944
- FR 2907684
- FR 2863932
- US 5681521 A
- US 2009317506 A
- US 7553156 B
- AT 521U1, KOSME
- FR 2935924
- WO 2010031923 A
- FR 2909305
- WO 2008081108 A